# EUROPEAN PATENT APPLICATION

(11) **EP 2 685 728 A2**
(43) Date of publication of application: **15.01.2014**
(21) Application number: 12754829.5
(22) Date of filing: 09.03.2012
(51) Int. Cl.: H04N 13/00

(54) **METHOD AND DEVICE FOR SYNCHRONIZING REFERENCE IMAGE AND SUPPLEMENTARY IMAGE IN REAL-TIME BROADCAST PROGRAM**

(30) Priority: 10.03.2011 KR 20110021256; 09.03.2012 KR 20120024344
(71) Applicant: Electronics And Telecommunications Research Institute, Daejeon-si 305-700 (KR)
(72) Inventor: JUNG, Kwanghee, Namyangju-si Gyeonggi-do 472-887 (KR); YIM, Hyun Jeong, Seoul 140-868 (KR); YUN, Kug Jin, Daejeon-si 305-759 (KR); LEE, Gwang Soon, Daejeon-si 305-747 (KR); KWON, Hyoung Jin, Cheongju-si Chungbuk 361-741 (KR); CHEONG, Won Sik, Daejeon-si 305-761 (KR); HUR, Nam Ho, Daejeon-si 305-768 (KR)
(74) Representative: Betten & Resch
(86) International application number: PCT/KR2012/001745
(87) International publication number: WO 2012/121567

(57) **Abstract**

Provided are a method and apparatus of synchronizing a reference picture and an additional picture of a real-time broadcasting program. The method includes: receiving an MPEG-2 transport stream (MPEG-2 TS) including a program level descriptor and an elementary stream (ES) level descriptor from a picture transmitting apparatus; loading an additional picture corresponding to a reference picture included in the elementary stream (ES) level descriptor from a memory provided in the picture receiving apparatus, based on file information regarding the reference picture; calculating a time difference between a current frame of the reference picture and a reference time stamp, based on the reference time stamp which is included in the program level descriptor and indicates a start time of a frame regarding the reference picture; synchronizing the frame regarding the reference picture and a frame regarding the additional picture by using the time difference; and providing a stereoscopic picture based on the synchronized frames regarding the reference picture and the additional picture. A stereoscopic video service can be stably provided.

## Description

### [Technical Field]

The present invention relates to synchronization method and, more particularly, to a method and apparatus of synchronizing a reference picture and an additional picture f a real-time 3D broadcasting program.

### [Background Art]

A stereoscopic video service is a service of transmitting beforehand a 3D additional picture (or a file) to a receiver and storing the same therein or storing it through an extra device (e.g., a universal serial bus (USB) device, or the like) and transmitting a reference picture by using an existing digital broadcast platform. Accordingly, the stereoscopic video service is able to provide a three-dimensional (3D) stereoscopic picture by cooperatively operating and synchronizing the 3D additional picture stored beforehand in the receiver with the reference picture. Multiplexing the additional picture and the reference picture together and transmitting the same for a stereoscopic service is defined to be a 'real-time' stereoscopic service.

Korean Patent Laid Open Publication No. 2010-0086440 (Entitled "Non-real-time stereoscopic service performing method in terrestrial digital multimedia broadcast and terrestrial digital multimedia broadcast receiving apparatus") discloses a stereoscopic service descriptor (referred to as an 'SS_descriptor', hereinafter) included in a program map table (PMT). The SS_descriptor includes a non-real time marker (NRT_marker) for signaling a start position (a position of a first frame) to synchronize a reference picture and an additional picture. However, if a receiver fails to receive the PMT for signaling the position of a first frame at a point in time at which a service starts, the receiver cannot accurately synchronize the reference picture and the additional picture.

### [Disclosure]

### [Technical Problem]

The present invention provides a method and apparatus of synchronizing a reference picture and an additional picture of a real-time broadcasting program.

The present invention also provides an apparatus and method of providing a 3D broadcast by using a stored additional picture and a reference picture broadcast in real-time.

The present invention also provides an apparatus and method of transmitting information used for synchronizing an additional picture and a reference picture through an SS_descriptor.

### [Technical Solution]

In an aspect, a method of providing a stereoscopic video service to a user by a picture receiving apparatus is provided. The method includes: receiving an MPEG-2 transport stream (MPEG-2 TS) including a program level descriptor (SNRT_program_descriptor) and an elementary stream (ES) level descriptor (SNRT_ES_info_descriptor) from a picture transmitting apparatus, loading an additional picture corresponding to a reference picture from a memory provided in the picture receiving apparatus, based on file information regarding the reference picture included in the elementary stream (ES) level descriptor (SNRT_ES_info_descriptor), calculating a time difference between a current frame of the reference picture and a reference time stamp, wherein the reference time stamp is included in the program level descriptor (SNRT_program_descriptor) and indicates a start time of a frame regarding the reference picture, synchronizing the frame regarding the reference picture and a frame regarding the additional picture by using the time difference, and providing a stereoscopic picture based on the synchronized frames regarding the reference picture and the additional picture.

In another aspect, a method of providing a stereoscopic video service to a user by a picture transmitting apparatus is provided. The method includes: generating an MPEG-2 transport stream (MPEG-2 TS) including a program level descriptor (SNRT_program_descriptor) and an elementary stream (ES) level descriptor (SNRT_ES_info_descriptor), and transmitting the generated MPEG-2 TS to a picture receiving apparatus.

The elementary stream (ES) level descriptor may include file information regarding a reference picture, the program level descriptor may include a reference time stamp indicating a start time of a frame regarding the reference picture, and the frame regarding the reference picture and a frame regarding the additional picture may be synchronized based on the reference time stamp.

In another aspect, a picture receiving apparatus providing a stereoscopic video service to a user is provided. The apparatus includes:a transport stream (TS) demultiplexing unit configured for receiving an MPEG-2 transport stream (MPEG-2 TS) including a program level descriptor (SNRT_program_descriptor) and an elementary stream (ES) level descriptor (SNRT_ES_info_descriptor) and configured for demultiplexing the MPEG-2 TS, a file managing unit configured for loading an additional picture corresponding to a reference picture from a memory, based on file information regarding the reference picture included in the elementary stream (ES) level descriptor;
a memory configured for storing the additional picture, and a synchronizing unit configured for calculating a time difference between a current frame of the reference picture and a reference time stamp, wherein the reference time stamp is included in the program level descriptor (SNRT_program_descriptor) and indicates a start time of a frame regarding the reference picture, and configured for synchronizing the frame regarding the reference picture and a frame regarding the additional picture based on the time difference.

### [Advantageous Effects]

Since synchronization time information, along with a stream transmitted in real-time, is signaled, even though a first PMT at a point in time at which a stereoscopic video service starts fails to be received or even when a packet error occurs, a stored additional picture and a reference picture transmitted in real-time can be synchronized. Thus, a stereoscopic video service can be stably provided.

### [Description of Drawings]

FIG. 1 is a view explaining a process of providing a stereoscopic picture by synchronizing a reference picture and an additional picture according to an embodiment of the present invention.
FIG. 2 is a view explaining a method of synchronizing a reference picture and an additional picture by a picture receiving apparatus according to an embodiment of the present invention.
FIG. 3 is a block diagram of a picture receiving apparatus according to an embodiment of the present invention.
FIG. 4 is a flow chart of signaling between a picture transmitting apparatus and a picture receiving apparatus according to an embodiment of the present invention.

### [Mode for Invention]

Hereinafter, some exemplary embodiments in the present invention will be described in detail with reference to the illustrative drawings. It is to be noted that in adding reference numerals to elements of each drawing, like reference numerals refer to like elements even though like elements are shown in different drawings. Further, in describing the present invention, well-known functions or constructions will not be described in detail since they may unnecessarily obscure the understanding of the present invention. Terms mentioned in the present disclosure are defined as follows.

### (1) Stereoscopic

Stereoscopic refers to characteristics providing a three-dimensional (3D) effect to a user by using data of left and right binocular views of human eyes and has the same meaning as 3D.

### (2) Monoscopic

Monoscopic refers to characteristics not providing a 3D effect to a user by using data of a single view of human eyes and has the same meaning as 2D.

### (3) Reference picture

A reference picture, a real-time stream providing a picture of a particular view, is an element constituting a stereoscopic picture. For example, a reference picture may be a left picture (or a right picture) of a 3D picture. The reference picture may be combined with an additional picture stored in a picture receiving apparatus to implement a stereoscopic picture. Here, in case of a moving picture, a reference picture may be designated as a 'reference moving picture' or 'reference video', and in case of a still picture, a reference picture may be designated as a 'reference still picture' or a 'reference picture'.

### (4) Additional picture

An additional picture, a picture of a different view, rather than a reference picture, in a stereoscopic picture, is another element constituting a stereoscopic picture. For example, an additional picture may be a right picture (or a left picture) of a 3D picture. In order for the additional picture to be reproduced as a stereoscopic picture together with a reference picture in a picture receiving apparatus, the additional picture is stored beforehand in the picture receiving apparatus. Here, in case of a moving picture, the additional picture may be designated as an 'additional moving picture' or 'additional video', and in case of a still picture, the additional picture may be designated as an 'additional still picture' or an 'additional picture'.

### (5) Picture receiving apparatus

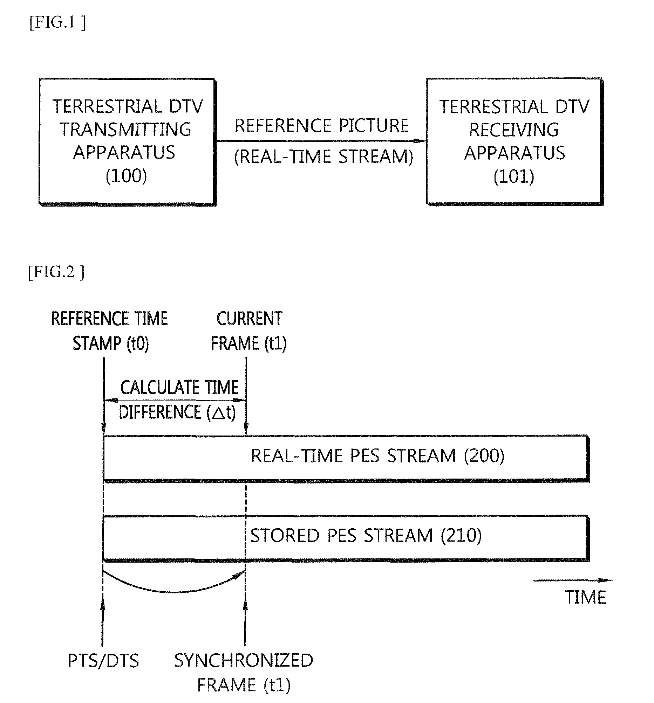

A picture receiving apparatus is an apparatus for receiving a picture based on a terrestrial digital TV (DTV), an Internet protocol, or any other transmission schemes. For example, the picture receiving apparatus may include various IT instruments such as a smart phone, a smart pad, a DMB receiver, a navigation device, a PDA, and the like. The picture receiving apparatus may receive an additional picture through a terrestrial DTV scheme, the Internet, or any other transmission schemes and store the same. The picture receiving apparatus provides a stereoscopic picture to a user by cooperatively operating the stored additional picture with a reference picture as a real-time stream. For example, the picture receiving apparatus includes a terrestrial DTV receiving apparatus used in a terrestrial DTV system illustrated in FIG. 1.

FIG. 1 is a view explaining a process of a stereoscopic picture by synchronizing a reference picture and an additional picture according to an embodiment of the present invention.

With reference to FIG. 1, a terrestrial DTV transmitting apparatus 100 may transmit a reference picture to a terrestrial DTV receiving apparatus 101 in real-time in order to provide a terrestrial DTV service. Here, the terrestrial DTV receiving apparatus 101 may provide a stereoscopic picture to a user. Since a stereoscopic service using left and right pictures provides a 3D picture, it provides 3D effect to the user. Here, in the stereoscopic service, both a left eye picture and a right eye picture should be transmitted, so an amount of information required to be transmitted is the maximum amount of two.

Thus, the terrestrial DTV transmitting apparatus 100 according to an embodiment of the present invention does not multiplex a reference picture for a stereoscopic service together with an additional picture and transmit it. For example, the terrestrial DTV receiving apparatus 101 stores the additional picture in a non-volatile storage device such as a memory. And, the terrestrial DTV receiving apparatus 101 processes the reference picture transmitted in real-time from the terrestrial DTV transmitting apparatus 100 together with the previously stored additional picture and provides a stereoscopic service to the user.

In an embodiment of the present invention, the terrestrial DTV receiving apparatus 101 may obtain the additional picture from the terrestrial DTV transmitting apparatus 100 according to various methods as follows.
(i) A method of downloading the additional picture in a file format to the terrestrial DTV receiving apparatus 101 by using a multimedia object transfer (MOT) protocol
(ii) A method of downloading the additional picture in a file format through the wired Internet, storing the additional picture in a mobile storage device, and transferring beforehand the additional picture to the terrestrial DTV receiving apparatus 101
(iii) A method of downloading beforehand the additional picture in a file format through the wireless Internet, when the terrestrial DTV receiving apparatus 101 supports the mobile Internet
(iv) In case of content such as advertisement which is repeatedly transmitted during a certain period of time, a method of transmitting the reference picture by alternating a left picture and a right picture by the terrestrial DTV transmitting apparatus 100, storing the alternately transmitted left and right pictures in a non-volatile storage device by the terrestrial DTV receiving apparatus 101 and processing the stored pictures together to stereoscopically display the same when the same content is broadcast afterwards. Namely, in this method, when the left picture is transmitted as a reference picture in real-time, the right picture previously stored in the terrestrial DTV receiving apparatus 101 is utilized as an additional picture, and when the right picture is transmitted as a reference picture in real-time, the left picture previously stored in the terrestrial DTV receiving apparatus 101 is utilized as an additional picture. According to this method (iv), when the left picture or the right picture is not previously stored in the terrestrial DTV receiving apparatus 101, a left picture or a right picture first transmitted from the terrestrial DTV transmitting apparatus 100 is monoscopically displayed. This method (iv) does not require an additional transfer rate for transmitting the additional picture but it can be applied only to repetitive content.

Hereinafter, a reference picture refers to a real-time broadcast stream and an additional picture refers to stored content. The reference picture and the additional picture are synchronized to provide a stereoscopic picture to the user.

In order to provide a stereoscopic video service according to an embodiment of the present invention, an accurate synchronization method in units of frames is required. Namely, on the assumption that an additional picture has been stored beforehand without an error in the picture receiving apparatus, an accurate start point of the reference picture at which a program-linked service starts in a real-time broadcasting program transmitted from the picture transmitting apparatus is required to be informed. Synchronization between the reference picture and the additional picture includes a method of loading additional picture content and synchronizing it with the reference picture transmitted in real-time when the picture receiving apparatus has one or more stored additional picture content constituting a stereoscopic picture.

To this end, the picture receiving apparatus may extract a program map table (PMT) corresponding to a program selected by the user from a program association table (PAT) included in an MPEG-2 transport stream (TS), analyze information defined in the descriptors (SNRT_program_descriptor and SNRT_ES_info_descriptor) in relation to a stereoscopic video service among descriptors corresponding to the program selected by the user from the PMT, extract a reference picture included in the MPEG-2 TS based on the descriptor corresponding to the program selected by the user from the PMT, extract an additional picture stored beforehand in the picture receiving apparatus by using the analyzed information, synchronize and display the extracted reference and additional pictures starting from a point in time at which a stereoscopic picture starts by using the analyzed information.

Here, in order to synchronize the reference picture and the additional picture, a reference time stamp (FirstAUTimeStamp) and file information of the reference picture are used. The reference time stamp indicates a point in time at which the stereoscopic video service or a frame regarding the reference picture starts. For example, the reference time stamp is defined based on a presentation time stamp (PTS) or a decode time stamp (DTS) of the picture transmitting apparatus or an encoder.

The file information of the reference picture includes at least one of a file name of the reference picture, a length of the file name, and a preservation term (or a maintenance term) of content stored as a file in a memory. The picture receiving apparatus may load the stored content based on the file information of the reference picture or store the reference picture.

When the picture transmitting apparatus transmits the reference time stamp and the file information of the reference picture to the picture receiving apparatus, signaling in relation to a stereoscopic video service may be used. The signaling in relation to the stereoscopic video service includes a program level descriptor (SNRT_program_descriptor) and an elementary stream (ES) level descriptor (SNRT_ES_info_descriptor). A syntax regarding the program level descriptor and the elementary stream (ES) level descriptor may include a stereoscopic service descriptor (SS_descriptor).

For example, the syntax of the program level descriptor may be defined as shown in Table 1 below.

**[Table 1]**

| |
|---|
| ```
         SS_descriptor () {
             descriptor_tag
             descriptor_length
             StereoMono_serviceFlag
            If (StereoMono_serviceFlag) {
                ServiceType
                If(Service_Type == SNRT) {
                   FirstAUTimeStamp
                }
             }
         }
``` |

With reference to Table 1, StereoMono_serviceFlag indicates discrimination of a monoscopic video service and a stereoscopic video service. For example, when StereoMono_serviceFlag=0, a video service regarding a corresponding program is a monoscopic video service, and when StereoMono_serviceFlag=1, a video service regarding a corresponding program is a stereoscopic video service. Service_type indicates a type of a stereoscopic video service. The picture transmitting apparatus may perform signaling on a stereoscopic video service mode (SNRT) based on the stored content by using Service_type. Alternatively, when there is any other service(s), the picture transmitting apparatus may additionally define a field to use it. FirstAUTimeStamp is a reference time stamp.

FIG. 2 is a view explaining a method of synchronizing a reference picture and an additional picture by the picture receiving apparatus according to an embodiment of the present invention.

With reference to FIG. 2, a real-time packetized elementary stream (PES) 200 and a stored PES 210 implement a stereoscopic picture together. The real-time PES 200 corresponds to a reference picture, and the stored PES 210 corresponds to an additional picture. The picture receiving apparatus receives the real-time PES 200 and reproduces a current frame t1. Also, the picture receiving apparatus receives a reference time stamp from the picture transmitting apparatus. The reference time stamp indicates a start time of the real-time PES 200, so the picture receiving apparatus is able to calculate a time difference Δt from a reference time stamp to to a current frame t1. The picture receiving apparatus searches for a synchronization frame t1 as a reproduction point in time of the stored PES 210 based on the calculation results and the PTS or the DTS. The picture receiving apparatus may synchronize the real-time PES 200 and the stored PES 210 to provide a stereoscopic picture. When the picture receiving apparatus synchronizes the reference picture and the additional picture by using the reference time stamp, even when a service is provided starting from a middle point in time due to an error of a PMT information transmission, as well as signaling from a service start point in time, a stereoscopic picture can be synchronized.

File information regarding the reference picture required for effectively loading the reference picture is transmitted through the elementary stream (ES) level descriptor. For example, syntax of the elementary stream (ES) level descriptor may be defined as shown in Table 2 below.

**[Table 2]**

| |
|---|
| ```
         SS_descriptor () {
              descriptor_tag
              descriptor_length
              view_flag
              Filename_length
              for(i=0;i=Filename_length;i++){
                   Filename
              }
              ExpireDate
         }
``` |

With reference to Table 2, View_flag indicates whether a reference picture (real-time TS) is a left picture or a right picture. When View_flag=0, a reference picture is the right picture, and when View_flag=1, a reference picture is the left picture. Filename_length indicates a length of a file name for bringing a file name, by byte. Filename indicates a file name. This describes a file name of actually transmitted content. In storing or loading a file, the picture receiving apparatus may attach a prefix 'L_' or 'R_' to the file name with reference to view_flag and store the file. The picture receiving apparatus searches for a picture of the opposite view of the reference picture view_flag and loads a file of an additional picture. ExpireDate indicates a maintenance term of content stored as a file in a flash memory.

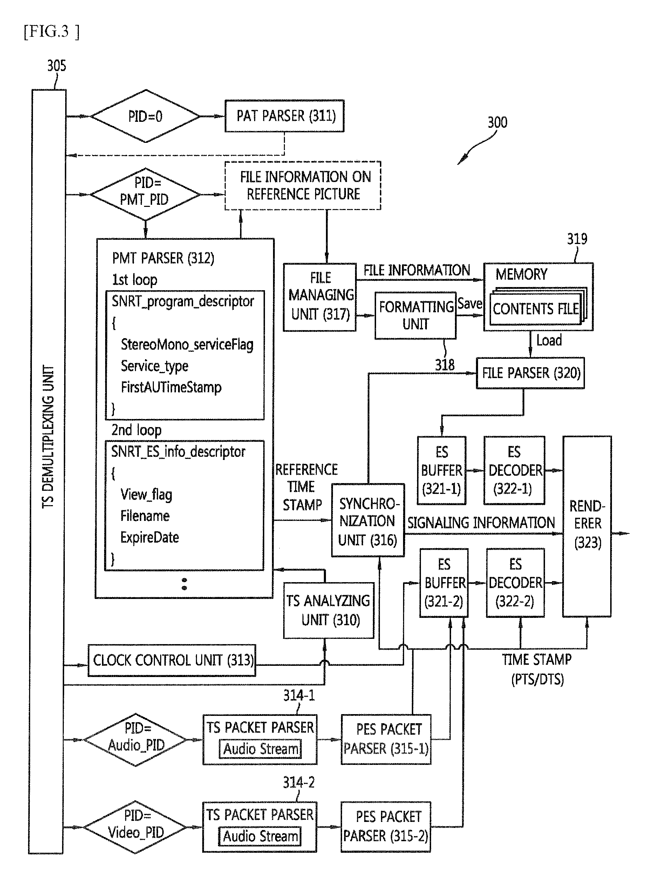

FIG. 3 is a block diagram of a picture receiving apparatus according to an embodiment of the present invention.

With reference to FIG. 3, a picture receiving apparatus 300 includes a TS demultiplexing unit 305, a TS analyzing unit 310, a PAT parser 311, a PMT parser 312, a clock control 313, TS packet parsers 314-1 and 314-2, PES packet parsers 315-1 and 315-2, a synchronization unit 316, a file managing unit 317, a formatting unit 318, a memory 319, a file parser 320, ES buffers 321-1 and 321-2, ES decoders 322-1 and 322-2, and a renderer 323.

A TS includes an MPEG-2 TS used in a terrestrial broadcast. The TS includes a PID. The TS demultiplexing unit 305 demultiplexes an input MPEG-2 TS packet, and the TS analyzing unit 310 analyzes a PAT having a PID of 0x0000 in the MPEG-2 TS. In case of PID=0, the corresponding PAT is input to the PAT parser 311.

The TS analyzing unit 310 reads a PID (PMT_PID) of a PMT corresponding to a program selected to be viewed by the user from among PAT content. Namely, in case of PID=PMT_PID, the PMT parser 312 may read descriptors corresponding to a program selected by the user from among the PMT content. For example, when a program level descriptor (SNRT_program_descriptor) and an elementary stream (ES) level descriptor (SNRT_ES_info_descriptor) exist, the PMT parser 312 analyzes information defined in each signaling. When the program level descriptor includes such a reference time stamp as shown in Table 1, the PMT parser 312 transfers reference time stamp information to the synchronization unit 316. Also, when the elementary stream (ES) level descriptor includes file information regarding such a reference picture as shown in Table 2, the PMT parser 312 transfers the file information to the file managing unit 317.

In case of PID+Audio_PID, an audio stream regarding the reference picture is input to the TS packet parser 314-1, and the TS packet parser 314-1 parses a TS packet and transfers the same to the PES packet parser 315-1.

Similarly, in case of PID=Video_PID, a video stream regarding the reference picture is input to the TS packet parser 314-2, and the TS packet parser 314-2 parses a TS packet and transfers the same to the PES packet parser 315-2.

The respective PES parsers 315-1 and 315-2 parse the parsed TS packets into PES packets and transmit the same to the ES buffer 321-2. The PES packet parser 315-1 outputs a PTS or a DTS regarding the parsed TS packets and transfers the same to the synchronization unit 316, the ES decoder 322-2, and the renderer 323.

The ES decoder 322-2 decodes an output from the ES buffer 321-2 into an ES packet based on the time stamp (PTS or DTS) and transfers the decoded ES packet to the renderer 323.

The synchronization unit 316 calculates a time difference Δt required for synchronizing the reference picture and the additional picture by using the reference time stamp. The time difference Δt is a difference between a start time indicated by the reference time stamp and a current frame of the reference picture. The synchronization unit 316 adjusts the decoding synchronization of a first frame or a certain frame of the stored additional picture to the current frame of the reference picture. The thusly synchronized frame of the additional picture is called a synchronized frame. The synchronization unit 316 transfers the time difference Δt to the file parser 320 and the renderer 323. Also, if necessary, the synchronization unit 316 may transfer PTS/DTS offset information of a reference picture file and an additional picture file to the renderer 323 to synchronize a time at which a picture is displayed.

The file managing unit 317 stores, loads, and manages content. The file managing unit 317 receives the file information regarding the reference picture from the PMT parser 312. The file information regarding the reference picture includes file information such as View_flag, Filename, or ExpireDate as shown in Table 2. The file managing unit 317 transfers the file information to the formatting unit 318 and the memory 319. The file managing unit 317 searches for a picture of the opposite view of the reference picture view_flag to determine whether or not the file of the relevant additional picture has been stored in the memory 319, and stores and loads an ES stream.

In detail, the file managing unit 317 may perform different operations according to cases as follows.

**[Table 3]**

| CASE | Reference picture stored file | Additional picture stored file | Operation | Broadcast mode |
|---|---|---|---|---|
| 1 | X | X | Store reference picture | 2D |
| 2 | X | O | Store reference picture | 3D |
| 3 | O | X | Compare file size and then store or not operate | 2D |
| 4 | O | O | Compare file size and then store or not operate | 3D |

In storing or loading a file, the formatting unit 318 attaches a prefix 'L_' or 'R_' to a file name with reference to view_flag to change the file name, and the memory 319 stores the file having the changed file name and the file information regarding the reference picture. The memory 319 may delete a file whose maintenance term has expired.

The file parser 320 loads the file information regarding the reference picture stored in the memory 319 and the file having the changed format. And then, the file parser 320 transfers the same to the ES buffer 321-1.

The ES buffer 321-1 outputs the loaded file regarding the additional picture as an ES, and the ES decoder 322-1 decodes the ES and transfers the same to the renderer 323.

The renderer 323 outputs an output from the ES decoder 322-1 and an output from the ES decoder 322-2, as a stereoscopic picture, based on the signaling information and time stamp of the synchronization unit 316. For example, the renderer 323 may selectively loads any one of a monoscopic video service and a stereoscopic video service according to whether or not the file regarding the reference picture or the file regarding the additional picture has been stored in the memory 319.

If the program level descriptor (SNRT_program_descriptor) and the elementary stream (ES) level descriptor (SNRT_ES_info_descriptor) do not exist, only the reference picture is provided in a 2D mode through the TS packet parsers 314-1 and 314-2, the PES packet parsers 315-1 and 315-2, the ES buffer 321-2, and the ES decoder 322-2, like an existing broadcast. Also, when there is no additional picture, stored content to be synchronized with the reference picture as a real-time stream, a picture is provided in the 2D mode.

In this manner, the picture receiving apparatus 300 may load a file stored in the memory or store a file by using the reference time stamp of the descriptor used for a terrestrial DTV broadcast and the file information regarding the reference picture, and reproduce the reference picture and the additional picture by synchronizing them.

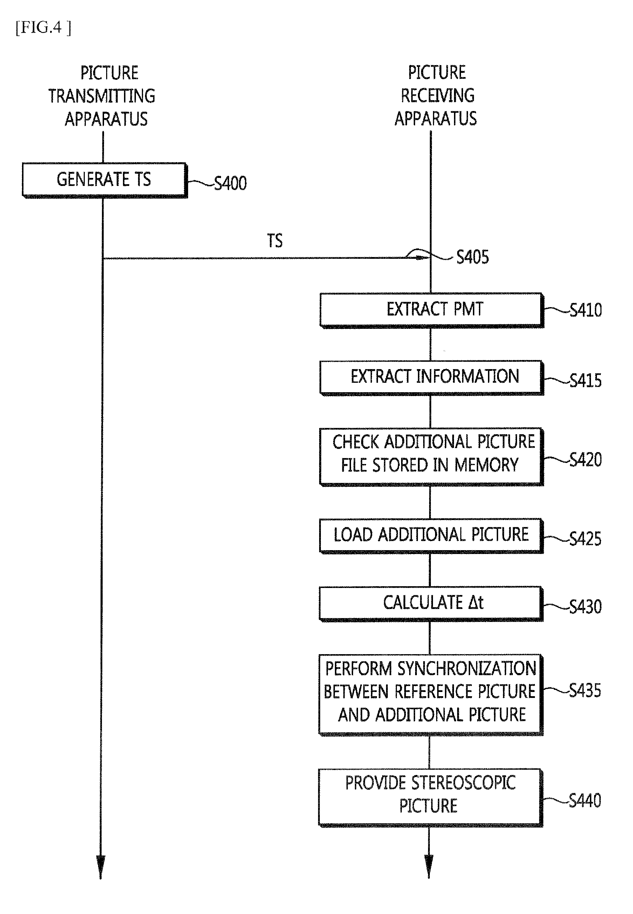

FIG. 4 is a flow chart of signaling between a picture transmitting apparatus and a picture receiving apparatus according to an embodiment of the present invention.

With reference to FIG. 4, a picture transmitting apparatus generates a transport stream (TS) (S400). The TS may be an MPEG-2 TS, a stream based on MPEG-2 standard. The TS may include a program level descriptor (SNRT_program_descriptor) including a reference time stamp (FirstAUTimeStamp), an ES level descriptor (SNRT_ES_info_descriptor) including file information regarding a reference picture, a program association table (PAT) including a program map table (PMT) corresponding to a particular program, and a reference picture.

The picture transmitting apparatus transmits the TS to a picture receiving apparatus (S405).

The picture receiving apparatus extracts a PMT corresponding to a program selected by the user from the PAT included in the received TS (S410), and extracts information defined in the program level descriptor (SNRT_program_descriptor) as a descriptor in relation to a stereoscopic video service and an ES level descriptor (SNRT_ES_info_descriptor) from descriptors corresponding to the program selected by the user from the PMT (S415).

The picture receiving apparatus searches for a picture of the opposite view of the reference picture view_flag based on the file information regarding the reference picture included in the ES level descriptor to check whether or not a file of a relevant additional picture has been stored in a memory thereof (S420). And then, the picture receiving apparatus loads an additional picture from the memory (S425).

The picture receiving apparatus calculates a time difference required for synchronizing the reference picture and the additional picture by using a reference time stamp included in the program level descriptor (S430). The time difference Δt is a difference between a start time indicated by the reference time stamp and a current frame of the reference picture. The picture receiving apparatus adjusts the decoding synchronization of a first frame or a certain frame of the previously stored additional picture to the current frame of the reference picture based on the time difference Δt and the time stamp PTS or DTS (S435). The thusly synchronized frame of the additional picture is called a synchronized frame.

The picture receiving apparatus provides a stereoscopic picture according to the reference picture and the additional picture whose frames have been synchronized (S440).

The spirit of the present invention has been just exemplified. It will be appreciated by those skilled in the art that various modifications and alterations can be made without departing from the essential characteristics of the present invention. Accordingly, the embodiments disclosed in the present invention and the accompanying drawings are used not to limit but to describe the spirit of the present invention. The scope of the present invention is not limited only to the embodiments and the accompanying drawings. The protection scope of the present invention must be analyzed by the appended claims and it should be analyzed that all spirits within a scope equivalent thereto are included in the appended claims of the present invention.

## Claims

1. A method of providing a stereoscopic video service to a user by a picture receiving apparatus, the method comprising:
receiving an MPEG-2 transport stream (MPEG-2 TS) including a program level descriptor (SNRT_program_descriptor) and an elementary stream (ES) level descriptor (SNRT_ES_info_descriptor) from a picture transmitting apparatus;
loading an additional picture corresponding to a reference picture from a memory provided in the picture receiving apparatus, based on file information regarding the reference picture included in the elementary stream (ES) level descriptor (SNRT_ES_info_deseriptor);
calculating a time difference between a current frame of the reference picture and a reference time stamp, wherein the reference time stamp is included in the program level descriptor (SNRT_program_descriptor) and indicates a start time of a frame regarding the reference picture;
synchronizing the frame regarding the reference picture and a frame regarding the additional picture by using the time difference; and
providing a stereoscopic picture based on the synchronized frames regarding the reference picture and the additional picture.

2. The method of claim 1, wherein the file information regarding the reference picture includes information regarding a view of the reference picture, information regarding a length of a file name to be loaded, information regarding the file name, and information indicating a maintenance term of content stored as a file in the memory.

3. The method of claim 1, wherein the program level descriptor further includes service flag information indicating whether the MPEG-2 TS is related to a monoscopic video service or a stereoscopic video service.

4. The method of claim 3, wherein any one of the monoscopic video service and the stereoscopic video service is selectively provided according to whether or not a file regarding the reference picture or a file regarding the additional picture is stored in the memory.

5. A method of providing a stereoscopic video service to a user by a picture transmitting apparatus, the method comprising:
generating an MPEG-2 transport stream (MPEG-2 TS) including a program level descriptor (SNRT_program_descriptor) and an elementary stream (ES) level descriptor (SNRT_ES_info_descriptor); and
transmitting the generated MPEG-2 TS to a picture receiving apparatus,
wherein the elementary stream (ES) level descriptor includes file information regarding a reference picture, the program level descriptor includes a reference time stamp indicating a start time of a frame regarding the reference picture, and the frame regarding the reference picture and a frame regarding the additional picture are synchronized based on the reference time stamp.

6. The method of claim 5, wherein the file information regarding the reference picture includes information regarding a view of the reference picture, information regarding a length of a file name to be loaded, information regarding the file name, and information indicating a maintenance term of content stored as a file in the memory.

7. The method of claim 5, wherein the program level descriptor further includes service flag information indicating whether the MPEG-2 TS is related to a monoscopic video service or a stereoscopic video service.

8. A picture receiving apparatus providing a stereoscopic video service to a user, the apparatus comprising:
a transport stream (TS) demultiplexing unit configured for receiving an MPEG-2 transport stream (MPEG-2 TS) including a program level descriptor (SNRT_program_descriptor) and an elementary stream (ES) level descriptor (SNRT_ES_info_descriptor) and configured for demultiplexing the MPEG-2 TS;
a file managing unit configured for loading an additional picture corresponding to a reference picture from a memory, based on file information regarding the reference picture included in the elementary stream (ES) level descriptor;
a memory configured for storing the additional picture; and
a synchronizing unit configured for calculating a time difference between a current frame of the reference picture and a reference time stamp, wherein the reference time stamp is included in the program level descriptor (SNRT_program_descriptor) and indicates a start time of a frame regarding the reference picture, and configured for synchronizing the frame regarding the reference picture and a frame regarding the additional picture based on the time difference.

9. The apparatus of claim 8, wherein the file managing unit is configured for loading the additional picture from the memory based on information regarding a view of the reference picture, information regarding a length of a file name to be loaded, information regarding the file name, and information indicating a maintenance term of content stored as a file in the memory.

10. The apparatus of claim 8, wherein the program level descriptor further includes service flag information indicating whether the MPEG-2 TS is related to a monoscopic video service or a stereoscopic video service.

11. The apparatus of claim 10, wherein the file managing unit is configured for selectively loading any one of the monoscopic video service and the stereoscopic video service according to whether or not a file regarding the reference picture or a file regarding the additional picture is stored in the memory.
